# EUROPÄISCHE PATENTSCHRIFT

(11) **EP 1 554 683 B1**
(45) Veröffentlichungstag und Bekanntmachung des Hinweises auf die Patenterteilung: **29.08.2012**
(21) Anmeldenummer: 03757701.2
(22) Anmeldetag: 09.10.2003
(51) Int. Cl.: G06K 7/00, G06K 17/00, G06F 13/00

(54) **VERFAHREN ZUR ÜBERPRÜFUNG DER QUALITÄT DER DATENÜBERTRAGUNG ZWISCHEN EINEM SCHREIB-/LESE-GERÄT (SLG) UND MINDESTENS EINEM MOBILEN DATENSPEICHER (MDS) SOWIE SCHREIB-/LESE-GERÄT (SLG) UND MOBILER DATENSPEICHER (MDS) ZUR ANWENDUNG DES VERFAHRENS**
METHOD FOR CHECKING THE QUALITY OF THE DATA TRANSMISSION BETWEEN A READ/WRITE DEVICE (SLG) AND AT LEAST ONE MOBILE DATA STORE (MDS) AND READ/WRITE DEVICE (SLG) AND MOBILE DATA STORE FOR APPLICATION IN THE METHOD
PROCEDE DE SURVEILLANCE DE LA QUALITE DE LA TRANSMISSION DE DONNEES ENTRE UN APPAREIL DE LECTURE / ECRITURE (SLG) ET AU MOINS UNE MEMOIRE DE DONNEES MOBILE (MDS), AINSI QU'APPAREIL DE LECTURE / ECRITURE (SLG) ET MEMOIRE DE DONNEES MOBILE (MDS) PERMETTANT LA MISE EN OEUVRE DUDIT PROCEDE

(30) Priorität: 22.10.2002 DE 10249203
(43) Veröffentlichungstag der Anmeldung: 20.07.2005
(73) Patentinhaber: SIEMENS AKTIENGESELLSCHAFT, 80333 München (DE)
(72) Erfinder: CUYLEN, Michael, 90513 Zirndorf (DE)
(86) Internationale Anmeldenummer: PCT/DE2003/003344
(87) Internationale Veröffentlichungsnummer: WO 2004/038591

(56) Entgegenhaltungen:
- WO-A-02/082363
- DE-A- 3 441 644
- US-A- 5 640 164
- US-B1- 6 298 233

## Beschreibung

Verfahren zur Überprüfung der Qualität der Datenübertragung zwischen einem Schreib-/Lese-Gerät (SLG) und mindestens einem mobilen Datenspeicher (MDS) sowie Schreib-/Lese-Gerät (SLG) und mobiler Datenspeicher (MDS) zur Anwendung des Verfahrens

Die Erfindung betrifft ein Verfahren zur Überprüfung der Datenübertragung zwischen mindestens einem Schreib-/Lese-Gerät (SLG) und mindestens einem mobilen Datenspeicher (MDS), insbesondere in einem Identifikationssystem mit mindestens einem an Objekten angebrachten mobilen Datenspeicher (MDS) zur Erfassung von objektbezogenen Zustands- und/oder Prozessdaten z.B. in einem Versand-, Transport- und/oder Fertigungssystem der einzelnen Objekte. Ferner betrifft die Erfindung ein Schreib-/Lese-Gerät (SLG) sowie einen mobilen Datenspeicher (MDS) zur Anwendung des Verfahrens.

Als Stand der Technik, siche Dokument WO 02/082363-A1, sind in der industriellen kontaktlosen Identtechnik Datenübertragungen mit hoher Geschwindigkeit zwischen Schreib-/Lese-Geräten (SLG) und mobilen Datenspeichern (MDS) bekannt. Für die dabei auftretenden Luftschnittstellen sind hinsichtlich Frequenz, Feldstärke, Modulationsbandbreite, Störaussendungen, Störbeeinflussungen etc. die jeweiligen postalischen Funkvorschriften einzuhalten. Beim Vorhandensein weiterer elektromagnetischer Quellen können in der Luftschnittstelle Störungen der Datenübertragung zwischen den Schreib-/Lese-Geräten (SLG) und den mobilen Datenspeichern (MDS) auftreten. Die Übertragungssicherheit der Datenübertragung wird ferner durch ortsbezogene Gegebenheiten sowie Umgebungsdaten wie z.B. Abstand zwischen Schreib-/Lese-Gerät (SLG) und mobilem Datenspeicher (MDS), Verfahrgeschwindigkeit des mobilen Datenspeichers (MDS), Umgebungstemperatur etc. beeinflusst und gegebenenfalls beeinträchtigt.

Der Erfindung liegt die Aufgabe zugrunde, ein Verfahren zur Überprüfung der Qualität der Datenübertragung zwischen mindestens einem Schreib-/Lese-Gerät (SLG) und mindestens einem mobilen Datenspeicher (MDS) anzubieten. Ferner sollen ein Schreib-/Lese-Gerät (SLG) und ein mobiler Datenspeicher (MDS) zur Anwendung des Verfahrens angeboten werden.

Beim erfindungsgemäßen Verfahren zur Überprüfung der Datenübertragung zwischen mindestens einem Schreib-/Lese-Gerät (SLG) und mindestens einem mobilen Datenspeicher (MDS) ist im Schreib-/Lese-Gerät (SLG) und/oder im mobilen Datenspeicher (MDS) mindestens ein Registerbereich zur Eintragung von Dateninformationen zur Qualität der Datenübertragung zwischen Schreib-/Lese-Gerät (SLG) und mobilem Datenspeicher (MDS) nach Anspruch 1 vorgesehen. Über diese Computer-Anwender-Station kann eine gezielte Ferndiagnose der Datenübertragung zwischen Schreib-/Lese-Gerät (SLG) und mobilen Datenspeichern (MDS) durchgeführt werden und es können insbesondere bei Inbetriebsetzung eines derartigen Systems zur Datenübertragung aber auch im Feldeinsatzes des Systems auftretende Probleme der Datenübertragung erkannt und behoben werden.

Mit dem erfindungsgemäßen Verfahren kann die Qualität der Luftschnittstellen bei der Datenübertragung zwischen Schreib-/Lese-Gerät (SLG) und mobilem Datenspeicher (MDS) erfasst und in der externen Computer-Anwender-Station beurteilt und ausgewertet werden. Ferner können sämtliche auftretenden Kommunikationsfehler oder Beeinträchtigungen wie der Kommunikation erfasst und behoben werden.

Gemäß einer vorteilhaften Verfahrensvariante kann die externe Computer-Anwender-Station zur Datenübertragung mit mindestens einem Schreib-/Lese-Gerät (SLG) verbunden sein. Hierdurch können die jeweiligen die Qualität der Datenübertragung betreffenden Registerbereiche des Schreib-/Lese-Geräts (SLG) ausgelesene werden. Das Schreib-/Lese-Gerät (SLG) kommuniziert wiederum mit dem mobilen Datenspeicher (MDS) und kann die entsprechenden Registerbereiche, welche die Qualität der Datenübertragung betreffen, auslesen und in eigenen Registerbereichen zum Auslesen durch die externe Computer-Anwender-Station ablegen.

Nach einer weiteren vorteilhaften Verfahrensvariante ist die externe Computer-Anwender-Station über ein Anschaltmodul mit dem Schreib-/Lese-Gerät (SLG) verbunden. Im einem derartigen Anschaltmodul kann eine protokollkonforme Datenübertragung zwischen Schreib-/Lese-Gerät (SLG) und externer Computer-Anwender-Station erreicht werden. Durch ein derartiges Anschaltmodul können z.B. vom Schreib-/Lese-Gerät (SLG) an die externe Computer-Anwender-Station übertragene Daten erst nach einer Blockbildung, Paketbildung und nach Überprüfung einer Protokollkonformität übertragen werden. Durch ein derartiges Anschaltmodul kann die Datenübertragung zwischen Schreib-/Lese-Gerät (SLG) und externer Computer-Anwender-Station zuverlässiger und schneller gestaltet werden.

Nach einer weiteren vorteilhaften Verfahrensvariante kann die externe Computer-Anwender-Station über eine Steuerung z.B. zur Steuerung eines Versand-, Transport- und/oder Fertigungssystems mit dem Schreib-/Lese-Gerät (SLG) verbunden sein. Die Steuerung dient dabei zur Prozesssteuerung des jeweiligen betriebenen industriellen Systems und veranlasst und überwacht den plangemäßen Betrieb derartiger Systeme. Bei Verbindung der externen Computer-Anwender-Station mit dem Schreib-/Lese-Gerät (SLG) über eine derartige Steuerung können neben den aus dem Schreib-/Lese-Gerät (SLG) auszulesenden Daten auch

Steuerungsdaten ausgelesen und in der externen Computer-Anwender-Station einander zugeordnet und gemeinsam ausgewertet werden. Hierdurch können in der externen Computer-Anwender-Station auch die jeweiligen Prozesszustände des gesteuerten industriellen Systems bei der Auswertung der vom Schreib-/Lese-Gerät (SLG) empfangenen Daten zur Qualität der Datenübertragung zwischen Schreib-/Lese-Gerät (SLG) und mobilen Datenspeichern (MDS) berücksichtigt werden.

Das erfindungsgemäße Schreib-/Lese-Gerät (SLG) besitzt mindestens einen Registerbereich zur Eintragung von die Qualität der Datenübertragung zu den mobilen Datenspeichern (MDS) betreffenden Dateninformationen nach Anspruch 5. Durch diesen mindestens einen weiteren Registerbereich können neben der Abspeicherung der zwischen Schreib-/Lese-Gerät (SLG) und mobilen Datenspeicher (MDS) erfassten objektbezogenen Zustands- und/oder Prozessdaten auch die Qualität der Datenübertragung betreffende Daten abgespeichert und zum Auslesen durch die externe Computer-Anwender-Station abgelegt werden. Das erfindungsgemäße Schreib-/Lese-Gerät (SLG) eignet sich damit auch zur Ferndiagnose über eine externe Computer-Anwender-Station.

Eine vorteilhafte Ausführungsform des Schreib-/Lese-Geräts (SLG) besitzt eine Zuordnung des Registerbereichs zur Eintragung der die Qualität der Datenübertragung betreffenden Dateninformationen zu einem weiteren Registerbereich mindestens eines mobilen Datenspeichers (MDS), der ebenfalls für die Eintragung von die Qualität der Datenübertragung betreffenden Dateninformationen vorgesehen ist.

Durch Zuordnung derartiger Registerbereiche zwischen Schreib-/Lese-Gerät (SLG) und mobilem Datenspeicher (MDS) können Daten und Protokollformate entsprechend aufeinander abgestimmt werden und aufeinander bezogene Informationen auch in korrespondierenden Registerbereichen abgelegt werden. Hierdurch wird die Auslesbarkeit der die Qualität der Datenübertragung betreffenden Dateninformationen aus den jeweiligen Registerbereichen erleichtert.

Der erfindungsgemäße mobile Datenspeicher (MDS) besitzt vorteilhafterweise ebenfalls mindestens einen Registerbereich zur Eintragung von die Qualität der Datenübertragung betreffenden Dateninformationen nach Anspruch 7. Hierdurch wird ebenfalls die Kommunikation mit dem Schreib-/Lese-Gerät (SLG) wie vorstehend beschrieben erleichtert.

Die Erfindung ist anhand von Ausführungsbeispielen in den Zeichnungsfiguren näher erläutert. Es zeigen:
- FIG 1: eine schematische Darstellung einer möglichen Verschaltung von mobilem Datenspeicher (MDS) und Schreib-/Lese-Gerät (SLG) mit einer externen Computer-Anwender-Station,
- FIG 2: eine konkrete Darstellung von Registerbereichen eines Schreib-/Lese-Geräts (SLG) sowie
- FIG 3: eine konkrete Darstellung von Registerbereichen eines mobilen Datenspeichers (MDS).

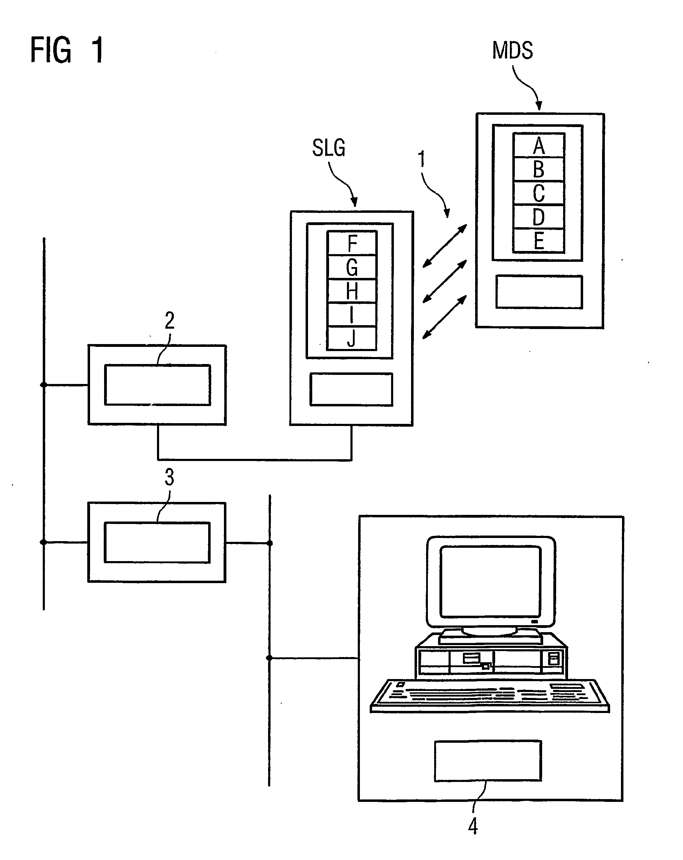

FIG 1 zeigt ein Schreib-/Lese-Gerät (SLG) sowie einen mobilen Datenspeicher (MDS) eines nicht näher abgebildeten und an sich bekannten Versand-, Transport- und/oder Fertigungssystems zur Erfassung von objektbezogenen Zustands- und/oder Prozessdaten des jeweiligen Systems. Dabei ist das Schreib-/Lese-Gerät (SLG) stationär und findet eine Datenübertragung über eine Luftschnittstelle 1 zwischen Schreib-/Lese-Gerät (SLG) und den jeweiligen mobilen Datenspeichern (MDS) statt. Üblicherweise kommuniziert ein Schreib-/Lese-Gerät (SLG) mit mehreren mobilen Datenspeichern (MDS) (nicht näher abgebildet).

Das Schreib-/Lese-Gerät (SLG) ist über ein Anschaltmodul 2 und eine Steuerung 3 mit einer externen Computer-Anwender-Station (z.B. einem Personal-Computer) verbunden, und zwar über ein an sich bekanntes Netzwerk (z.B. TCP/IP, WLAN etc.). Die im Netzwerk übertragenen Daten können nach unterschiedlichen an sich bekannten Netzprotokollen (z.B. ProfiBus, CAN, EtherNet etc.) übertragen werden.

Erfindungsgemäß besitzt das Schreib-/Lese-Gerät (SLG) weitere Registerbereiche F, G, H, I und J zur Eintragung von die Qualität der Datenübertragung mit dem mobilen Datenspeicher (MDS) betreffenden Dateninformationen. Das Schreib-/Lese-Gerät (SLG) besitzt ferner an sich bekannte Registerbereiche zur Erfassung und Abspeicherung der übertragenen objektbezogenen Zustands- und/oder Prozessdaten (nicht näher abgebildet). Im mobilen Datenspeicher (MDS) sind ebenfalls weitere Registerbereiche A, B, C, D und E vorgesehen, welche ebenfalls zur Eintragung von die Qualität der Datenübertragung mit dem Schreib-/Lese-Gerät (SLG) betreffenden Dateninformationen dienen.

Die Computer-Anwender-Station 4 kann nun über die Steuerung 3 und das Anschaltmodul 2 die Registerbereiche F- J des Schreib-/Lese-Geräts (SLG) auslesen und die dort abgelegten die Qualität der Datenübertragung betreffenden Dateninformationen erfassen und bei auftretenden Störungen auch Fehler der Datenübertragung beheben.

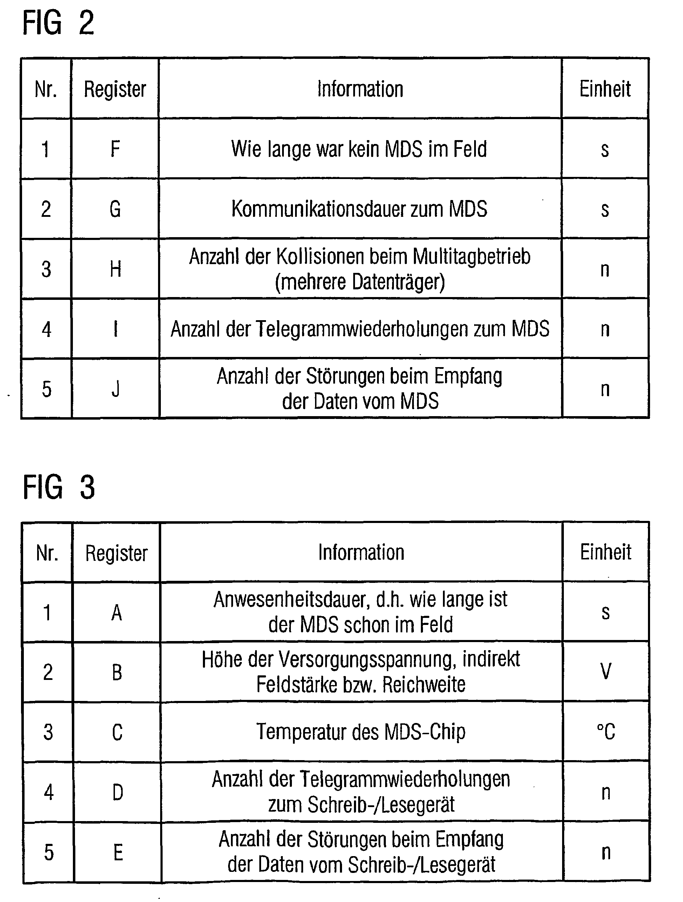

In den FIG 2 und 3 sind beispielhaft die Qualität der Datenübertragung betreffenden Dateninformationen dargestellt. Im Schreib-/Lese-Gerät (SLG) kann im Registerbereich F die Dateninformation über die Zeitdauer, für welche kein mobiler Datenspeicher (MDS) im vorhandenen Datenübertragungsfeld vorhanden war, abgelegt werden. Im Registerbereich G kann die Kommunikationsdauer zum mobilen Datenspeicher (MDS) abgelegt werden. Der Registerbereich H kann die Anzahl der Kollisionen beim Multitagbetrieb mit mehreren mobilen Datenspeichern (MDS) festhalten.

Im Register I kann die Anzahl der Telegrammwiederholungen zum mobilen Datenspeicher (MDS) und im Registerbereich J kann die Anzahl der Störungen beim Empfang von Daten vom mobilen Datenspeicher (MDS) erfasst werden.

Damit umfassen die Registerbereiche F- J des Schreib-/Lese-Geräts (SLG) die Qualität der Datenübertragung zwischen Schreib-/Lese-Gerät (SLG) und mobilem Datenspeicher (MDS) betreffende Dateninformationen, welche von der externen Computer-Anwender-Station 4 ausgelesen und ausgewertet werden können. So kann z.B. beim Auslesen des Registerbereichs A von der Feststellung einer hohen Anzahl von Kollisionen beim Betrieb mit mehreren mobilen Datenspeichern (MDS) festgelegt werden, dass das Schreib-/Lese-Gerät (SLG) zur Behebung der Kommunikationsstörung nur mit einer geringeren Anzahl von mobilen Datenspeichern (MDS) kommunizieren darf.

Gemäß FIG 3 besitzt der mobile Datenspeicher (MDS) neben an sich bekannten und nicht näher abgebildeten Registerbereichen zur Erfassung und Abspeicherung der übertragenen objektbezogenen Zustands- und/oder Prozessdaten erfindungsgemäß Registerbereiche A - E, wobei im Registerbereich A z.B. die Anwesenheitsdauer des mobilen Datenspeichers (MDS) im Datenfeld erfasst wird. Im Registerbereich B kann die Höhe der Versorgungsspannung des mobilen Datenspeichers (MDS) direkt und indirekt die Feldstärke des Feldes des mobilen Datenspeichers (MDS) bzw. die Reichweite des Feldes des mobilen Datenspeichers (MDS) damit ermittelt werden.

Der Registerbereich C kann die Temperatur des mobilen Datenspeicher-Chips (MDS) betreffen, der Registerbereich D die Anzahl der Telegrammwiederholungen zum Schreib-/Lese-Gerät (SLG) und der Registerbereich E die Anzahl der Störungen beim Empfang der Daten vom Schreib-/Lese-Gerät (SLG).

Die Registerbereiche A - E können von der externen Computer-Anwender-Station 4 über das Schreib-/Lese-Gerät (SLG) ausgelesen werden. Die Registerbereiche G und J des Schreib-/Lese-Gerät (SLG) und des mobilen Datenspeichers (MDS) sind dabei beispielhaft einander zugeordnet und betreffen jeweils die Anzahl der Störungen beim Empfang der Daten vom Schreib-/Lese-Gerät (SLG) bzw. vom mobilen Datenspeicher (MDS). Durch Auslesen und Auswerten derartiger zugeordneter Registerbereiche kann in der externen Computer-Anwender-Station 4 eine Störungsanalyse und eine -behebung erleichtert werden.

## Patentansprüche

1. Verfahren zur Überprüfung der Datenübertragung zwischen mindestens einem Schreib-/Lese-Gerät (SLG) und mindestens einem mobilen Datenspeicher (MDS), insbesondere in einem Identifikationssystem mit mindestens einem an Objekten angebrachten mobilen Datenspeicher (MDS) zur Erfassung von objektbezogenen Zustands- und/oder Prozessdaten z.B. in einem Versand-, Transport- und/oder Fertigungssystem der einzelnen objekte, **dadurch gekennzeichnet daß** das Schreib-/Lese-Gerät (SLG) und/oder der mobile Datenspeicher (MDS) mindestens einen Registerbereich zur Eintragung von Dateninformationen zur Qualität der Datenübertragung zwischen Schreib-/Lese-Gerät (SLG) mit mobilem Datenspeicher (MDS) aufweist und dieser Registerbereich zur Überprüfung der Qualität der Datenübertragung zwischen dem Schreib-/Lese-Gerät (SLG) und dem mobilen Datenspeicher (MDS) von mindestens einer externen Computer-Anwender-Station (4) ausgelesen wird.

2. Verfahren nach Anspruch 1, wobei die externe Computer-Anwender-Station (4) zur Datenübertragung mit dem Schreib-/Lese-Gerät (SLG) verbunden ist.

3. Verfahren nach Anspruch 2, wobei die externe Computer-Anwender-Station (4) über ein Anschaltmodul (2) mit dem Schreib-/Lese-Gerät (SLG) verbunden ist.

4. Verfahren nach Anspruch 2 oder 3, wobei die externe Computer-Anwender-Station (4) über eine Steuerung (3) mit dem Schreib-Lese-Gerät (SLG) verbunden ist.

5. Schreib-Lese-Gerät (SLG) zur Anwendung eines Verfahrens zur Überprüfung der Qualität der Datenübertragung zwischen mindestens einem Schreib-Lese-Gerät (SLG) und mindestens einem mobilen Datenspeicher (MDS), insbesondere zur Anwendung eines Verfahrens nach einem der Ansprüche 1 - 4, mit mindestens einem Registerbereich zur Eintragung von die Qualität der Datenübertragung betreffenden Dateninformationen.

6. Schreib-/Lese-Gerät (SLG) nach Anspruch 5, wobei der Registerbereich mindestens einem korrespondierenden Registerbereich mindestens eines mobilen Datenspeichers (MDS) zum Datenaustausch zugeordnet ist.

7. Mobiler Datenspeicher (MDS) zur Anwendung eines Verfahrens zur Überprüfung der Qualität der Datenübertragung zwischen mindestens einem Schreib-/Lese-Gerät (SLG) und mindestens einem mobilen Datenspeicher (MDS), insbesondere zur Anwendung eines Verfahrens nach einem der Ansprüche 1 - 4, mit mindestens einem Registerbereich zur Eintragung von die Qualität der Datenübertragung betreffenden Dateninformationen.

8. Mobiler Datenspeicher (MDS) nach Anspruch 7, wobei der Registerbereich mindestens einem korrespondierenden Registerbereich mindestens eines Schreib-/Lese-Geräts (SLG) zum Datenaustausch zugeordnet ist.

## Claims

1. Method for checking data transmission between at least one read/write device (SLG) and at least one mobile data memory (MDS), in particular in an identification system having at least one mobile data memory (MDS) which is fitted to objects and is intended to detect object-related state and/or process data, for example in a system for dispatching, transporting and/or manufacturing the individual objects, **characterized in that** the read/write device (SLG) and/or the mobile data memory (MDS) has/have at least one register area for entering data information relating to the quality of data transmission between the read/write device (SLG) and the mobile data memory (MDS), and in which this register area is read by at least one external computer user station (4) for the purpose of checking the quality of data transmission between the read/write device (SLG) and the mobile data memory (MDS).

2. Method according to Claim 1, in which the external computer user station (4) is connected to the read/write device (SLG) for the purpose of transmitting data.

3. Method according to Claim 2, in which the external computer user station (4) is connected to the read/write device (SLG) via a connection module (2).

4. Method according to Claim 2 or 3, in which the external computer user station (4) is connected to the read/write device (SLG) via a controller (3).

5. Read/write device (SLG) for using a method for checking the quality of data transmission between at least one read/write device (SLG) and at least one mobile data memory (MDS), in particular for using a method according to one of Claims 1 - 4, having at least one register area for entering data information relating to the quality of data transmission.

6. Read/write device (SLG) according to Claim 5, in which the register area is associated with at least one corresponding register area in at least one mobile data memory (MDS) for the purpose of interchanging data.

7. Mobile data memory (MDS) for using a method for checking the quality of data transmission between at least one read/write device (SLG) and at least one mobile data memory (MDS), in particular for using a method according to one of Claims 1 - 4, having at least one register area for entering data information relating to the quality of data transmission.

8. Mobile data memory (MDS) according to Claim 7, in which the register area is associated with at least one corresponding register area in at least one read/write device (SLG) for the purpose of interchanging data.

## Revendications

1. Procédé de contrôle de la transmission de données entre au moins un appareil (SLG) d'écriture-/lecture et au moins une mémoire (MDS) de données mobile, notamment dans un système d'identification ayant au moins une mémoire (MDS) de données mobile appliquée à des objets, pour la détection de données d'état et/ou de processus se rapportant à des objets, par exemple dans un système d'expédition, de transport et/ou de fabrication des divers objets, **caractérisé en ce que** l'appareil (SLG) d'écriture-/lecture et/ou la mémoire (MDS) de données mobile comporte au moins une partie de registre pour l'entrée d'informations de données sur la qualité de la transmission de données entre l'appareil (SLG) d'écriture-/lecture et la mémoire (MDS) de données mobile, et cette partie de registre est, pour le contrôle de la qualité de la transmission de données entre l'appareil (SLG) d'écriture-/lecture et la mémoire (MDS) de données mobile, lue par au moins un poste (4) extérieur ordinateur-utilisateur.

2. Procédé suivant la revendication 1, dans lequel le poste (4) extérieur ordinateur-utilisateur est, pour la transmission de données, relié à l'appareil (SLG) d'écriture-/lecture.

3. Procédé suivant la revendication 2, dans lequel le poste (4) extérieur ordinateur-utilisateur est relié à l'appareil (SLG) d'écriture-/lecture par un module (2) de connexion.

4. Procédé suivant la revendication 2 ou 3, dans lequel le poste (4) extérieur ordinateur-utilisateur est relié à l'appareil (SLG) d'écriture-lecture par une commande (3 ).

5. Appareil (SLG) d'écriture-lecture pour l'application d'un procédé de contrôle de la qualité de la transmission de données entre au moins un appareil (SLG) d'écriture-lecture et au moins une mémoire (MDS) de données mobile, notamment pour l'application d'un procédé suivant l'une des revendications 1 à 4, comprenant au moins une partie de registre pour l'entrée d'informations de données concernant la qualité de la transmission de données.

6. Appareil (SLG) d'écriture-/lecture suivant la revendication 5, dans lequel la partie de registre est, pour l'échange de données, associée à au moins une partie de registre correspondante d'au moins une mémoire (MDS) de données mobile.

7. Mémoire (MDS ) de données mobile pour l'application d'un procédé de contrôle de la qualité de la transmission de données entre au moins un appareil (SLG) d'écriture-/lecture et au moins une mémoire (MDS) de données mobile, notamment pour l'application d'un procédé suivant l'une des revendications 1 à 4, comprenant au moins une partie de registre pour l'entrée d'informations de données concernant la qualité de la transmission de données.

8. Mémoire (MDS) de données mobile suivant la revendication 7, dans lequel la partie de registre est, pour l'échange de données, associée à au moins une partie de registre correspondante d'au moins un appareil (SLG) d'écriture/lecture.
